# EUROPÄISCHE PATENTSCHRIFT

(11) **EP 1 181 790 B1**
(45) Veröffentlichungstag und Bekanntmachung des Hinweises auf die Patenterteilung: **16.07.2003**
(21) Anmeldenummer: 00938554.3
(22) Anmeldetag: 12.05.2000
(51) Int. Cl.: H04L 12/00

(54) **NETZWERK SOWIE KOPPELGERÄT ZUR VERBINDUNG ZWEIER SEGMENTE IN EINEM DERARTIGEN NETZWERK UND NETZWERKTEILNEHMER**
NETWORK AND COUPLING DEVICE FOR CONNECTING TWO SEGMENTS IN SUCH A NETWORK AND NETWORK NODES
RESEAU ET APPAREIL DE COUPLAGE POUR RELIER DEUX SEGMENTS DANS UN RESEAU DE CE TYPE ET NOEUDS DE RESEAU

(30) Priorität: 14.05.1999 DE 29908608 U
(43) Veröffentlichungstag der Anmeldung: 27.02.2002
(73) Patentinhaber: SIEMENS AKTIENGESELLSCHAFT, 80333 München (DE)
(72) Erfinder: BRÜCKNER, Dieter, D-96199 Unterleiterbach (DE); SEITER, Jürgen, D-76530 Baden-Baden (DE); TREMEL, Michael, D-90439 Nürnberg (DE)
(86) Internationale Anmeldenummer: DE0001499
(87) Internationale Veröffentlichungsnummer: WO00070822

(56) Entgegenhaltungen:
- EP-A- 0 843 931
- DE-A- 4 418 622
- DE-A- 19 702 319

## Beschreibung

Die Erfindung bezieht sich auf ein Netzwerk nach dem Oberbegriff des Anspruchs 1, ein Koppelgerät zur Verbindung zweier Segmente in einem derartigen Netzwerk und auf einen Teilnehmer zum Anschluss an ein Segment eines derartigen Netzwerks.

Bei asynchroner Datenübertragung, gleichgültig ob im Basisband oder moduliert, verfügen die an ein Netzwerk angeschlossenen Teilnehmer über keinen gemeinsamen Takt. Dennoch ist es zur Datenübertragung erforderlich, dass ein empfangender Teilnehmer aus einem empfangenen Signal eine gesendete Bitfolge rekonstruieren kann. Dazu muss die Signalübernahme beim Empfänger synchron zum Aussenden der Daten beim Sender erfolgen. Für diese Synchronisierungsaufgabe wird ein Takt benötigt, der die Gültigkeitszeitpunkte des Datensignals bestimmt und von einer Übertragungsrate, die üblicherweise in Bit pro Sekunde gemessen wird, abhängig ist. Damit die Daten zwischen den Teilnehmern am Netzwerk korrekt übertragen werden, müssen also die an den Teilnehmern eingestellten Übertragungsraten übereinstimmen. Insbesondere Feldbusse, wie sie beispielsweise in der DE 44 18 622 A1 beschrieben sind, stellen oft mehrere Übertragungsraten zur Auswahl. Zur Synchronisation der Datenübertragung muss an jedem Teilnehmer dieselbe Übertragungsrate eingestellt werden. In Netzwerken geringer Ausdehnung kann dies manuell mit Schaltern geschehen, deren Codierung der Übertragungsrate entspricht und durch einen geeignet programmierten Mikroprozessor ausgelesen wird. Insbesondere in Netzwerken mit optischer Signalübertragung liegen Koppelgeräte, die zur Verbindung von Segmenten des Netzwerks verwendet werden, und Teilnehmer räumlich weit auseinander und ein manuelles Einstellen einer neuen Übertragungsrate wäre sehr kosten- und zeitaufwendig. In der bereits oben genannten DE 44 18 622 A1 ist ein Verfahren zur Bestimmung der Übertragungsrate in einem Netzwerk beschrieben, mit welchem dieser Aufwand vermieden werden kann. Aus dem Abstand zwischen zwei Flanken des Übertragungssignals, das von einem Teilnehmer mitgehört wird, ohne dass er selbst am Bus aktiv ist, wird auf die Übertragungsrate geschlossen. Dieser Abstand ist zwar abhängig von der Anzahl der Bits, die zwischen den Flanken liegen; es gibt aber Abstandswerte, die eindeutig einer Übertragungsrate zuordenbar sind. Bei einer mehrdeutigen Zuordenbarkeit des Messwerts erhält man eine Menge von Übertragungsraten. Werden mehrere Mengen durch Auswerten mehrerer Messwerte ermittelt, so kann häufig eine Schnittmenge dieser Mengen gebildet werden, die eine eindeutige Bestimmung der Übertragungsrate erlaubt. Diese Art der Übertragungsratenbestimmung wird auch in Koppelgeräten eingesetzt, dort als Repeater bezeichnet, welche Segmente des Netzwerks verbinden und an einem Segment empfangene Signale verstärkt an die anderen angeschlossenen Segmente ausgeben. Um eine Ausbreitung von Störungen auf das gesamte Netzwerk zu verhindern, werden die Repeaterausgänge erst dann freigeschaltet, wenn ein einer Übertragungsrate eindeutig zuordenbarer und danach zumindest drei aufeinanderfolgende ein- oder mehrdeutig derselben Übertragungsrate zuordenbare Messwerte erfasst wurden. Wenn in der Zwischenzeit keine drei aufeinanderfolgenden, dieser Übertragungsrate ein- oder mehrdeutig zuordenbare Messwerte erfasst werden, wird wieder so lange gewartet, bis ein eindeutig zuordenbarer Messwert gefunden wird. In einem freigeschalteten Koppelgerät kann das erfindungsgemäße Verfahren während des Betriebs im Hintergrund immer mitlaufen, um eine Neueinstellung der Übertragungsrate zu erkennen und die eigene Übertragungsrate erforderlichenfalls umzustellen. Dazu wird ein Fehlerzähler um Eins hochgezählt, sobald die Messung eine eindeutige Zuordnung zu einer anderen als der gerade eingestellten Übertragungsrate ergibt. Jede Messung, die eine eindeutige Zuordnung zu der aktuell eingestellten Übertragungsrate ergibt, erniedrigt den Fehlerzähler um Eins. Alle anderen Messwerte beeinflussen den Fehlerzähler nicht. Sobald der Fehlerzähler den Wert 32 erreicht hat, wird das oben beschriebene Verfahren zur Bestimmung der Übertragungsrate von neuem gestartet und der Fehlerzähler zurückgesetzt. Nachteilig dabei ist, dass die Erkennung einer Änderung der Übertragungsrate und die Bestimmung der neuen Übertragungsrate mehrere Telegramme benötigt. Zudem ist die erforderliche Zeit nicht vorhersagbar, da sie sowohl von der früheren, als auch von der neuen Übertragungsrate und von den übertragenen Telegrammen abhängt. Weiterhin kann ein Koppelgerät erst dann Telegramme an nachgeschaltete Koppelgeräte weiterleiten, wenn es selbst die neue Übertragungsrate erkannt und eingestellt hat. Erst danach können somit nachgeschaltete Koppelgeräte die neue Übertragungsrate erkennen und einstellen. Die Ausbreitung einer neuen Übertragungsrate über das gesamte Netzwerk benötigt daher bei vielen Koppelgeräten, die in Reihe geschaltet sind, eine erhebliche Zeit. In dieser Zeit gesendete Telegramme gehen verloren und erreichen nicht den Empfänger.

Der Erfindung liegt die Aufgabe zugrunde, ein Netzwerk zu schaffen, das sich schneller auf eine neue Übertragungsrate einstellt. Weitere Aufgaben sind es, ein neues Koppelgerät zur Verbindung zweier Segmente in einem derartigen Netzwerk sowie einen neuen Teilnehmer zum Anschluss an ein Segment eines derartigen Netzwerks zu schaffen, die sich ebenfalls durch eine schnellere Ausbreitung oder Einstellung einer neuen Übertragungsrate auszeichnen.

Zur Lösung dieser Aufgabe weist das neue Netzwerk der eingangs genannten Art die im kennzeichnenden Teil des Anspruchs 1 angegebenen Merkmale auf. Vorteilhafte Weiterbildungen des Netzwerks sind in Anspruch 2, ein neues Koppelgerät zur Verbindung zweier Segmente in einem derartigen Netzwerk in den Ansprüchen 3 und 5 sowie ein neuer Teilnehmer zum Anschluss an ein Segment eines derartigen Netzwerks in Anspruch 4 beschrieben.

Die Erfindung hat den Vorteil, dass sich eine neu eingestellte Übertragungsrate von einem Teilnehmer erheblich schneller über ein Koppelgerät zu weiteren angeschlossenen Koppelgeräten oder Teilnehmern ausbreitet. Da zu den nachgeschalteten Teilnehmern oder Koppelgeräten die in dem ersten Koppelgerät bestimmte Übertragungsrate als Information in einem Sondertelegramm empfangen wird, können diese durch Auswerten nur eines Telegramms bereits die Datenrate bestimmen und einstellen. Damit wird eine erheblich schnellere Ausbreitung und zudem eine besser vorhersagbare Ausbreitungszeit einer neuen Übertragungsrate über ein Koppelgerät hinweg erreicht.

Wenn alle Koppelgeräte in der Lage sind, Sondertelegramme zu generieren, in welchen die neue Datenrate als Information enthalten ist, und andererseits derartige Sondertelegramme zu empfangen und ihre Empfangseinrichtungen für reguläre Telegramme des Datenverkehrs auf eine in einem empfangenen Sondertelegramm als Information enthaltene Datenrate einzustellen, so breitet sich eine neue Datenrate in vorteilhafter Weise schnell über das gesamte Netzwerk aus. Ein empfangenes Sondertelegramm kann ähnlich einem Broadcast-Telegramm, das an alle Teilnehmer des Netzwerks gerichtet ist, an alle nachfolgenden Koppelgeräte oder Teilnehmer zur Weiterleitung der neuen Datenrate übertragen werden.

Anhand der Zeichnungen, in denen ein Ausführungsbeispiel der Erfindung dargestellt ist, werden im folgenden Vorteile und Ausgestaltungen der Erfindung näher erläutert.

Es zeigen:
Figur 1 einen Ausschnitt eines Netzwerks,
Figur 2 den prinzipiellen Aufbau eines Teilnehmers und
Figur 3 ein Blockschaltbild eines Koppelgeräts.

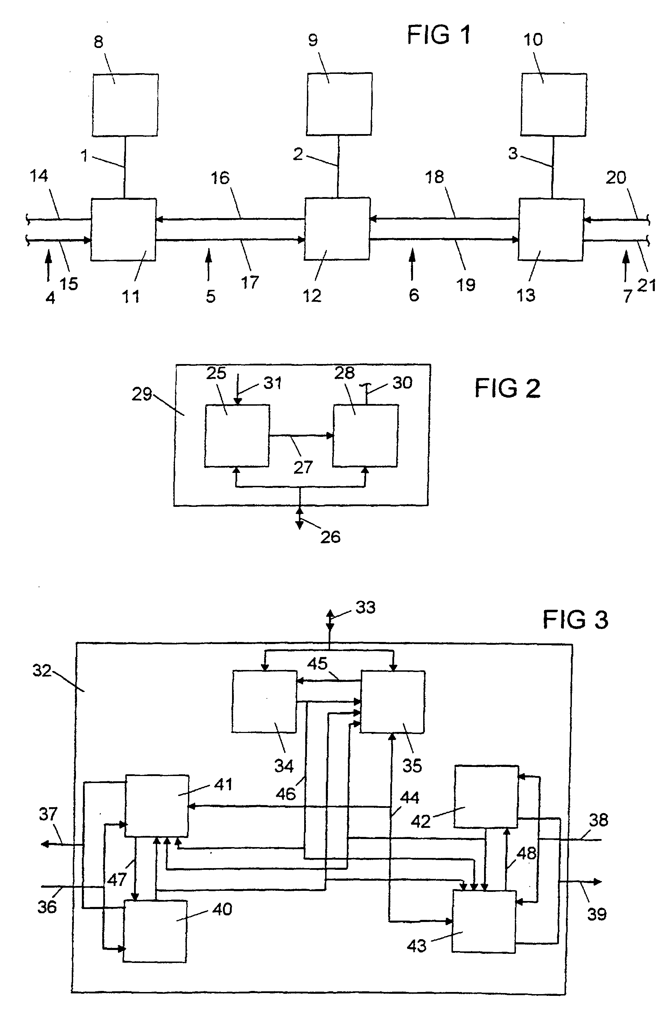

Gemäß Figur 1 enthält ein Netzwerk Segmente 1, 2 und 3, auf denen Daten mit elektrischen Signalen übertragen werden, sowie Segmente 4, 5, 6 und 7 mit optischer Signalübertragung.

Es ist lediglich ein Ausschnitt des Netzwerks dargestellt. An den Segmenten 4 und 7 können sich weitere, der Übersichtlichkeit wegen nicht dargestellte Koppelgerate oder Teilnehmer befinden. Teilnehmer 8, 9 und 10 sind durch die Segmente 1, 2 bzw. 3 mit Koppelgeräten 11, 12 bzw. 13 verbunden. Die Segmente 4, 5, 6 und 7 mit optischer Signalübertragung besitzen für jede Übertragungsrichtung einen Lichtwellenleiter. Für Segment 4 sind dies Lichtwellenleiter 14 und 15, für Segment 5 Lichtwellenleiter 16 und 17, für Segment 6 Lichtwellenleiter 18 und 19 sowie für Segment 7 Lichtwellenleiter 20 und 21. Die Übertragungsrichtungen auf den Lichtwellenleitern sind jeweils durch Pfeilspitzen markiert. Die Segmente 1, 2 und 3 sind in diesem Ausführungsbeispiel nach der Spezifikation RS485 aufgebaut, und die Datenübertragung erfolgt gemäß dem Protokoll des PROFIBUS DP. Das Netzwerk ist mit mehreren verschiedenen Datenraten betreibbar. Sind alle Netzwerkkomponenten auf dieselbe Datenrate eingestellt, so können beliebig Telegramme zwischen den Teilnehmern 8, 9 und 10 ausgetauscht werden. Sendet beispielsweise der Teilnehmer 8 ein Telegramm auf das Segment 1 aus, so wird das Telegramm von dem Koppelgerät 11 empfangen und auf die Lichtwellenleiter 14 und 17 der Segmente 4 bzw. 5 mit optischer Signalübertragung weitergeleitet. Auf der anderen Seite des Segments 5 empfängt das Koppelgerät 12 das auf dem Lichtwellenleiter 17 ankommende Telegramm und übergibt es an die Segmente 2 und 6. Somit empfängt auch das Koppelgerät 13 das Telegramm von dem Lichtwellenleiter 19 des Segments 6 und leitet es auf die Segmente 3 und 7 weiter. Wie in der RS485-Spezifikation näher beschrieben, enthalten die auf dem Netzwerk verkehrenden Telegramme jeweils eine Zieladresse, anhand welcher Teilnehmer erkennen können, ob ein Telegramm für den jeweiligen Teilnehmer bestimmt ist oder nicht. Wird nun beispielsweise im Teilnehmer 8 eine neue Übertragungsrate eingestellt oder wird an das Segment 1, an welchem zuvor kein Teilnehmer angeschlossen war, nun ein neuer Teilnehmer 8 mit einer neuen Übertragungsrate angeschlossen, so sendet der Teilnehmer 8 zunächst Telegramme mit einer anderen Übertragungsrate als derjenigen, die in den Koppelgeräten 11, 12 und 13 sowie in den Teilnehmern 9 und 10 eingestellt ist. Da die Teilnehmer 9 und 10 sowie die Koppelgeräte 11, 12 und 13 somit nicht auf die neue Übertragungsrate synchronisiert sind, können die Telegramme des Teilnehmers 8 von diesen zunächst nicht korrekt empfangen werden. Das Koppelgerät 11 ist derart ausgebildet, dass es anhand der auf dem Segment 1 empfangenen Telegramme die zur Übertragung verwendete Datenrate bestimmen kann. Ist die Datenrate erkannt, so generiert das Koppelgerät 11 Sondertelegramme, welche die zuvor bestimmte Datenrate als Information enthalten, und sendet diese Sondertelegramme auf die Lichtwellenleiter 14 und 17 der Segmente 4 bzw. 5 aus. Gleichzeitig stellt das Koppelgerät 11 seine Komponenten, die für den regulären Telegrammverkehr im Netzwerk vorgesehen sind, auf die neue Übertragungsrate ein. Das Koppelgerät 12, welches ein Sondertelegramm vom Lichtwellenleiter 17 empfängt, leitet es auf den Lichtwellenleiter 19 des Segments 6 und auf das Segment 2 weiter. Gleichzeitig wertet das Koppelgerät 12 das Sondertelegramm aus und stellt ebenfalls die Datenrate seiner für den regulären Telegrammverkehr vorgesehenen Komponenten auf die neue Datenrate ein. Das Sondertelegramm wird dabei mit einer festen, für alle Netzkomponenten gleichen Übertragungsrate im Netzwerk übertragen. Die Arbeitsweise des Koppelgeräts 13 ist analog zu derjenigen des Koppelgeräts 12, so dass das Sondertelegramm über das Segment 3 den Teilnehmer 10 erreicht. Auch die Teilnehmer 9 und 10 stellen bei Empfang des Sondertelegramms ihre zur regulären Kommunikation auf dem Netzwerk erforderlichen Komponenten auf die neue Übertragungsrate ein. Anhand des beschriebenen Ausführungsbeispiels wird deutlich, dass sich eine neue Übertragungsrate rasch zu allen Komponenten des Netzwerks ausbreitet.

Figur 2 zeigt ein Blockschaltbild eines Teilnehmers 29 mit den wesentlichen Teilen einer Kommunikationseinrichtung. Weitere applikationsspezifische Schaltungsteile des Teilnehmers sind der Übersichtlichkeit wegen nicht dargestellt.

Die Kommunikationseinrichtung weist eine Empfangseinrichtung 25 auf, die auf eine fest vorgegebene Datenrate eingestellt ist. Diese fest vorgegebene Datenrate ist bei allen Komponenten des Netzwerks dieselbe, mit welcher die Sondertelegramme übertragen werden. Damit ist die Empfangseinrichtung 25 ständig in der Lage, derartige Sondertelegramme von einem Segment 26 als Kanal zu empfangen und auszuwerten. In diesen Sondertelegrammen ist als Information enthalten, mit welcher Datenrate Telegramme des regulären Datenverkehrs auf dem Netzwerk übertragen werden. Diese Datenrate wird durch Auswerten des Sondertelegramms in der Empfangseinrichtung 25 ermittelt und durch ein Signal 27 einer Busanschaltung 28 angezeigt. Die Busanschaltung 28 ist auf verschiedene Datenraten einstellbar und übernimmt die mit dem Signal 27 angezeigte Datenrate. Telegramme des regulären Datenverkehrs auf dem Netzwerk werden durch die Busanschaltung 28 mit der übernommenen Datenrate gesendet und empfangen. Ein Datenaustausch zwischen in Figur 2 nicht dargestellten applikationsspezifischen Schaltungsteilen des Teilnehmers 29 und der Busanschaltung 28 erfolgt über Leitungen 30.

Prinzipiell ist das Netzwerk auch betreibbar, wenn in dem Teilnehmer 29 keine Empfangseinrichtung 25 für die fest vorgegebene Übertragungsrate vorgesehen ist. Die Busanschaltung eines derartigen Teilnehmers muss dann auf eine andere Weise auf eine neue Übertragungsrate einstellbar sein. Vorteilhaft geschieht dies mit einer Einrichtung zur Bestimmung der Übertragungsrate, wie sie beispielsweise aus der eingangs erwähnten DE 44 18 622 A1 bekannt ist. Selbstverständlich kann eine Busanschaltung mit einer derartigen Einrichtung auch mit einer Empfangseinrichtung 25 für eine fest vorgegebene Übertragungsrate kombiniert werden.

Die Empfangseinrichtung 25 des Teilnehmers 29 ist zudem dazu ausgebildet, bei einer Änderung der aktuell auf dem Netzwerk zum regulären Datenverkehr verwendeten Datenrate, die mit einem Signal 31 der Empfangseinrichtung 25 angezeigt wird, ein Sondertelegramm zu generieren, in welchem die neue Datenrate als Information enthalten ist, und das Sondertelegramm mit der fest vorgegebenen Datenrate an die weiteren am Segment 26 angeschlossenen Komponenten zu übertragen. Damit wird eine schnelle Einstellung des Netzwerks auf eine neue Übertragungsrate für den regulären Datenverkehr erreicht. Eine derartige Änderung der aktuell auf dem Netzwerk für den regulären Datenverkehr verwendeten Datenrate kann beispielsweise durch eine manuelle Eingabe über eine in Figur 2 nicht dargestellte Eingabeeinrichtung des Teilnehmers 29 vorgegeben werden.

Figur 3 zeigt die wesentlichen Komponenten eines Koppelgeräts 32, das zum Anschluss eines Teilnehmers mit einem elektrischen Kanal an ein Bussystem mit optischer Signalübertragung dient. Ein Teilnehmer mit elektrischer Signalübertragung ist an eine Leitung 33 anschließbar, die im Koppelgerät 32 auf eine Empfangseinrichtung 34 und eine Busanschaltung 35 geführt ist. An einen optischen Kanal, der für die beiden Übertragungsrichtungen einen Lichtwellenleiter 36 bzw. einen Lichtwellenleiter 37 aufweist, sowie an einen optischen Kanal mit einem Lichtwellenleiter 38 bzw. einem Lichtwellenleiter 39 können jeweils weitere Koppelgeräte angeschlossen werden. Die Lichtwellenleiter 36 und 37 sind im Koppelgerät auf eine Empfangseinrichtung 40 und eine Busanschaltung 41 geführt, die Lichtwellenleiter 38 und 39 sind mit einer Empfangseinrichtung 42 und einer Busanschaltung 43 verbunden. Die prinzipielle Funktionsweise der Empfangseinrichtungen 34, 40 und 42 sowie andererseits die prinzipielle Funktionsweise der Busanschaltungen 35, 41 und 43 entsprechen einander, so dass es genügt, lediglich anhand der Empfangseinrichtung 34 und der Busanschaltung 35 die Funktion des Koppelgeräts 32 insgesamt zu beschreiben. Auf dem Segment 33 eingehende Telegramme des regulären Datenverkehrs werden in der Busanschaltung 35 bei korrekt eingestellter Datenrate empfangen und über eine Leitung 44 an die Busanschaltungen 41 und 43 weitergegeben, welche die Telegramme auf den Lichtwellenleitern 37 bzw. 39 ausgeben. In der Busanschaltung 35 ist zusätzlich eine Einrichtung zur Bestimmung der Datenrate eingehender Telegramme vorgesehen, wie sie bereits aus der oben genannten DE 44 18 622 A1 bekannt ist. Weicht die Datenrate eines empfangenen Telegramms von der aktuell eingestellten Datenrate der Busanschaltung 35 ab, so wird erst nach Erkennen der Datenrate die neue Datenrate in der Busanschaltung 35 eingestellt. Der Vorgang der Datenratenerkennung kann über den Eingang mehrerer Telegramme hinweg andauern. Ist die neue Datenrate erkannt, zeigt die Busanschaltung 35 der Empfangseinrichtung 34 die neue Datenrate mit einem Signal 45 an. Mit einem Signal 46 gibt die Empfangseinrichtung 34 die neue Datenrate auch an die Busanschaltungen 41 und 43 weiter, die sich damit ebenfalls auf die neue Übertragungsrate einstellen. Zudem zeigen die Busanschaltungen 41 und 43 der jeweils zugeordneten Empfangseinrichtung 40 bzw. 42 mit Signalen 47 bzw. 48 einen Wechsel der Übertragungsrate an, die daraufhin ein Sondertelegramm auf den Lichtwellenleitern 37 bzw. 39 generieren, welches die neue Übertragungsrate als Information enthält. Dieses Sondertelegramm wird mit einer fest vorgegebenen Datenrate an die angeschlossenen Koppelgeräte übertragen, die somit, bereits kurz nachdem das Koppelgerät 32 einen Wechsel der Übertragungsrate erkannt hat, über die neue Übertragungsrate auf dem Netzwerk informiert werden. Eine schnellere Möglichkeit, das Koppelgerät 32 selbst auf eine neue Datenrate umzustellen, stellt der Empfang eines derartigen Sondertelegramms vom Segment 33 dar. Die Empfangseinrichtung 34 ist auf eine fest vorgegebene Datenrate eingestellt, die mit der Datenrate des Sondertelegramms übereinstimmt. Sie hört ständig den Telegrammverkehr auf dem Segment 33 mit und ist somit immer in der Lage, auf dem Segment 33 übertragene Sondertelegramme korrekt zu empfangen und auszuwerten. Durch das Signal 46 zeigt die Empfangseinrichtung 34 wiederum die neue Datenrate den Busanschaltungen 35, 41 und 43 an, die somit bereits kurz nach Empfang des Sondertelegramms auf die neue Übertragungsrate eingestellt werden. In den Empfangseinrichtungen 40 und 42 werden daraufhin entsprechende Sondertelegramme für weitere Koppelgeräte erzeugt, die gegebenenfalls an den Lichtwellenleitern 37 bzw. 39 angeschlossen sind.

Das anhand Figur 3 beschriebene Modell eines Koppelgeräts 32 dient lediglich zum leichteren Verständnis seiner Funktionsweise. Beispielsweise eine Steuereinheit, welche nach Erkennen des ersten eingehenden Telegramms auf einem der drei angeschlossenen Segmente die beiden übrigen Segmente sperrt, um Kollisionen zu vermeiden, ist in Figur 3 der Übersichtlichkeit wegen nicht dargestellt. In einer Abwandlung des in Figur 3 gezeichneten Blockschaltbilds kann in einem Koppelgerät auch nur eine Empfangseinrichtung und eine Busanschaltung vorgesehen werden, der dann ein Schalter zur Auswahl des Empfangskanals, auf welchem zuerst ein eingehendes Telegramm erkannt wurde, vorgeschaltet und ein Schalter zur Auswahl der Ausgabekanäle, auf welche das eingehende Telegramm weitergeleitet werden soll, nachgeschaltet ist. In diesem Fall werden den einzelnen Kanälen lediglich die Empfänger und Treiber für die jeweiligen physikalischen Signale zugeordnet.

Bei Verwendung einer Busanschaltung, welche in der Lage ist, neben Telegrammen des regulären Datenverkehrs mit einer von verschiedenen möglichen Übertragungsraten ständig auch Sondertelegramme mit einer fest vorgegebenen Datenrate zu empfangen, kann eine gesonderte Empfangseinrichtung für die Sondertelegramme entfallen. Die Empfangseinrichtung ist in diesem Fall in der Busanschaltung integriert.

## Patentansprüche

1. Netzwerk mit mehreren Teilnehmern, das in mehrere durch zumindest ein Koppelgerät (11, 12, 13) miteinander verbundene Segmente (1 ... 7) unterteilt ist, wobei zumindest ein erstes Koppelgerät (11) dazu ausgebildet ist, anhand eines empfangenen Telegramms die zur Übertragung des Telegramms verwendete Datenrate zu bestimmen, **dadurch gekennzeichnet, dass** das erste Koppelgerät (11) Mittel aufweist, um ein Sondertelegramm zu generieren, in welchem die zuvor bestimmte Datenrate als Information enthalten ist, und um das Sondertelegramm mit einer fest vorgegebenen Datenrate an benachbarte Teilnehmer und/oder Koppelgeräte (12) zu senden, und dass zumindest einer der benachbarten Teilnehmer und/oder Koppelgeräte (12) eine Empfangseinrichtung (40) und eine Busanschaltung (41) für denselben Kanal aufweist, wobei die Empfangseinrichtung (40) auf die fest vorgegebene Datenrate des Sondertelegramms eingestellt und die Busanschaltung (41) auf verschiedene Datenraten einstellbar ist und wobei die Empfangseinrichtung (40) und die Busanschaltung (41) derart zusammenwirken, dass die Datenrate der Busanschaltung (41) auf die Datenrate eingestellt wird, die in einem von der Empfangseinrichtung (40) empfangenen Sondertelegramm als Information enthalten ist.

2. Netzwerk nach Anspruch 1, **dadurch gekennzeichnet, dass** alle Koppelgeräte (11, 12, 13) des Netzwerks die Merkmale des ersten Koppelgeräts (11) und des zum ersten Koppelgerät (11) benachbarten Koppelgeräts (12) aufweisen.

3. Koppelgerät zur Verbindung zweier Segmente in einem Netzwerk nach Anspruch 1, **dadurch gekennzeichnet, dass** das Koppelgerät (11, 12, 13) dazu ausgebildet ist, anhand eines empfangenen Telegramms die zur Übertragung des Telegramms verwendete Datenrate zu bestimmen, und Mittel aufweist, um ein Sondertelegramm zu generieren, in welchem die zuvor bestimmte Datenrate als Information enthalten ist, und um das Sondertelegramm mit einer fest vorgegebenen Datenrate an benachbarte Teilnehmer und/oder Koppelgeräte zu senden.

4. Netzwerkteilnehmer zum Anschluss an ein Segment eines Netzwerks nach Anspruch 1, **dadurch gekennzeichnet, dass** der Teilnehmer eine Empfangseinrichtung (25) und eine Busanschaltung (28) aufweist, wobei die Empfangseinrichtung (25) auf die fest vorgegebene Datenrate des Sondertelegramms eingestellt und die Busanschaltung (28) auf verschiedene Datenraten einstellbar ist und wobei die Empfangseinrichtung (25) und die Busanschaltung (28) derart zusammenwirken, dass die Datenrate der Busanschaltung (28) auf die Datenrate eingestellt wird, die in einem von der Empfangseinrichtung (25) empfangenen Sondertelegramm als Information enthalten ist.

5. Koppelgerät zur Verbindung zweier Segmente in einem Netzwerk nach Anspruch 1, **dadurch gekennzeichnet, dass** das Koppelgerät (12) eine Empfangseinrichtung (34) und eine Busanschaltung (35) für denselben Kanal (33) aufweist, wobei die Empfangseinrichtung (34) auf die fest vorgegebene Datenrate des Sondertelegramms eingestellt und die Busanschaltung (35) auf verschiedene Datenraten einstellbar ist und wobei die Empfangseinrichtung (34) und die Busanschaltung (35) derart zusammenwirken, dass die Datenrate der Busanschaltung (35) auf die Datenrate eingestellt wird, die in einem von der Empfangseinrichtung (34) empfangenen Sondertelegramm als Information enthalten ist.

## Claims

1. Network with several participants, which is divided into several segments (1 ... 7) linked together by at least one coupling device (11, 12, 13), wherein at least a first coupling device (11) is designed to determine from a received message the data rate used for transmission of the message, **characterized in that** the first coupling device (11) presents means of generating a special message in which the previously determined data rate is contained as information, and of sending the special message at a permanently predefined data rate to adjoining participants and/or coupling devices (12), and that at least one of the adjoining participants and/or coupling devices (12) presents a receiving facility (40) and a bus access circuit (41) for the same channel, the receiving facility (40) being set to the permanently predefined data rate of the special message and the bus access circuit (41) being settable to various data rates, and the receiving facility (40) and bus access circuit (41) interacting in such a way that the data rate of the bus access circuit (41) is set to the data rate that is contained as information in a special message received from the receiving facility (40).

2. Network as claimed in Claim 1, **characterized in that** all coupling devices (11, 12, 13) of the network present the features of the first coupling device (11) and of the coupling device (12) adjoining the first coupling device (11).

3. Coupling device for connecting two segments in a network as claimed in Claim 1, **characterized in that** the coupling device (11, 12, 13) is designed, on the basis of a received message, to determine the data rate used for transmitting the message, and presents means of generating a special message in which the previously determined data rate is contained as information, and of sending the special message at a permanently predefined data rate to adjoining participants and/or coupling devices.

4. Network participant for connection to a segment of a network as claimed in Claim 1, **characterized in that** the participant presents a receiving facility (25) and a bus access circuit (28), the receiving facility (25) being set to the permanently predefined data rate of the special message and the bus access circuit (28) being settable to various data rates, and the receiving facility (25) and bus access circuit (28) interacting in such a way that the data rate of the bus access circuit (28) is set to the data rate that is contained as information in a special message received from the receiving facility (25).

5. Coupling device for connecting two segments in a network as claimed in Claim 1, **characterized in that** the coupling device (12) presents a receiving facility (34) and a bus access circuit (35) for the same channel (33), the receiving facility (34) being set to the permanently predefined data rate of the special message and the bus access circuit (35) being settable to various data rates, and the receiving facility (34) and bus access circuit (35) interacting in such a way that the data rate of the bus access circuit (35) is set to the data rate that is contained as information in a special message received from the receiving facility (34).

## Revendications

1. Réseau avec plusieurs noeuds d'abonnés, qui est divisé en plusieurs segments (1 à 7) reliés entre eux par au moins un appareil de connexion (11, 12, 13), au moins un premier appareil de connexion (11) étant conçu pour déterminer à l'aide d'un télégramme reçu le débit de données utilisé pour la transmission du télégramme, **caractérisé par le fait que** le premier appareil de connexion (11) comporte des moyens pour générer un télégramme spécial qui contient comme information le débit de données qui vient d'être déterminé et pour envoyer le télégramme spécial avec un débit de données prédéterminé fixe à des noeuds et/ou appareils de connexion (12) voisins, et au moins l'un des noeuds et/ou appareils de connexion (12) voisins comporte un dispositif récepteur (40) et une connexion de bus (41) pour le même canal, le dispositif récepteur (40) étant réglé sur le débit de données prédéterminé fixe du télégramme spécial, la connexion de bus (41) pouvant être réglée sur différents débits de données et le dispositif récepteur (40) et la connexion de bus (41) coopérant de telle sorte que le débit de données de la connexion de bus (41) est réglé sur le débit de données qui est contenu comme information dans un télégramme spécial reçu par le dispositif récepteur (40).

2. Réseau selon la revendication 1, **caractérisé par le fait que** tous les appareils de connexion (11, 12, 13) du réseau ont les caractéristiques du premier appareil de connexion (11) et de l'appareil de connexion (12) voisin du premier appareil de connexion (11).

3. Appareil de connexion pour relier deux segments dans un réseau selon la revendication 1, **caractérisé par le fait que** l'appareil de connexion (11, 12, 13) est conçu pour déterminer à l'aide d'un télégramme reçu le débit de données utilisé pour la transmission du télégramme et qu'il comporte des moyens pour générer un télégramme spécial qui contient comme information le débit de données qui vient d'être déterminé et pour envoyer le télégramme spécial avec un débit de données prédéterminé fixe à des noeuds et/ou appareils de connexion voisins.

4. Noeud de réseau pour le raccordement à un segment d'un réseau selon la revendication 1, **caractérisé par le fait que** le noeud comporte un dispositif récepteur (25) et une connexion de bus (28), le dispositif récepteur (25) étant réglé sur le débit de données prédéterminé fixe du télégramme spécial, la connexion de bus (28) pouvant être réglée sur différents débits de données et le dispositif récepteur (25) et la connexion de bus (28) coopérant de telle sorte que le débit de données de la connexion de bus (28) est réglé sur le débit de données qui est contenu comme information dans un télégramme spécial reçu par le dispositif récepteur (25).

5. Appareil de connexion pour relier deux segments dans un réseau selon la revendication 1, **caractérisé par le fait que** l'appareil de connexion (12) comporte un dispositif récepteur (34) et une connexion de bus (35) pour le même canal (33), le dispositif récepteur (34) étant réglé sur le débit de données prédéterminé fixe du télégramme spécial, la connexion de bus (35) pouvant être réglée sur différents débits de données et le dispositif récepteur (34) et la connexion de bus (35) coopérant de telle sorte que le débit de données de la connexion de bus (35) est réglé sur le débit de données qui est contenu comme information dans un télégramme spécial reçu par le dispositif récepteur (34).
